# EUROPÄISCHE PATENTSCHRIFT

(11) **EP 1 218 447 B1**
(45) Veröffentlichungstag und Bekanntmachung des Hinweises auf die Patenterteilung: **11.05.2005**
(21) Anmeldenummer: 00947876.9
(22) Anmeldetag: 26.06.2000
(51) Int. Cl.: C08L 59/04, C08K 3/00, C08G 2/24

(54) **VERFAHREN ZUR HERSTELLUNG EMISSIONSARMER EINGEFÄRBTER POLYOXYMETHYLEN-FORMMASSEN UND DEREN VERWENDUNG**
PROCESS FOR THE PREPARATION OF LOW-EMISSION COLOURED POLYOXYMETHYLENE MOULDING MATERIALS AND THEIR USE
PROCEDE DE PREPARATION DE MATIERES A MOULER POLYOXYMETHYLENE COLOREES A FAIBLE DEGAGEMENT ET LEUR UTILISATION

(30) Priorität: 06.08.1999 DE 19936715
(43) Veröffentlichungstag der Anmeldung: 03.07.2002
(73) Patentinhaber: Ticona GmbH, 65451 Kelsterbach (DE)
(72) Erfinder: DISCH, Stefan, D-60599 Frankfurt (DE); MUECK, Karl-Friedrich, D-65207 Wiesbaden (DE); REISSMANN, Lothar, D-65719 Hofheim (DE)
(86) Internationale Anmeldenummer: PCT/EP2000/005879
(87) Internationale Veröffentlichungsnummer: WO 2001/010952

(56) Entgegenhaltungen:
- EP-A- 0 638 599
- DE-A- 19 803 227

## Beschreibung

Die vorliegende Erfindung betrifft ein Verfahren zur Herstellung eingefärbter Polyoxymethylen-Formmassen, die zur Herstellung von emissionsarmen farbigen Formteilen verwendet werden können.

Seit ihrer Markteinführung vor etwa 35 Jahren haben sich Polyoxymethylene (POM) als äußerst nützliche technische Werkstoffe in vielen Anwendungen durchgesetzt. Besonders als Konstruktionswerkstoff im Automobilbau und in der Elektroindustrie findet POM breite Anwendung. Beispiele hierfür sind in den anwendungstechnischen Broschüren der POM-Hersteller zu finden.

POM-Copolymere und ihre Herstellung sind bereits bekannt (Sabel et al. in Becker/Braun Hrsg., Kunststoff-Handbuch Band 3/1, München-Wien, 1992). So ist bereits bekannt, daß Trioxan unter Verwendung von kationisch aktiven Initiatoren mit zyklischen Ethem copolymerisierbar ist. Als kationisch wirkende Initiatoren werden üblicherweise Lewissäuren wie BF₃, starke Protonensäuren wie Perfluoralkansulfonsäuren, HClO₄ oder Heteropolysäuren eingesetzt. Als Comonomer wird üblicherweise Ethylenoxid oder das zyklische Formal von Ethylenglykol, Butandiol oder Diethylenglykol verwendet.

Es ist bekannt, daß das bei der Polymerisation gebildete POM-Copolymer zur Desaktivierung des Initiators in einem protischen, flüssigen Medium suspendiert wird, wobei oft im gleichen Prozeßschritt instabile Kettenenden eliminiert werden (DE 3703790, DE 3738632, EP 0137305). Die instabilen Kettenenden können bekanntlich auch in homogener Lösung bei 120 °C bis 220 °C abgebaut werden (Kunststoff-Handbuch, p. 316). Als Lösungsmittel sind Wasser und organische Lösungsmittel, insbesondere niedere Alkohole, Trioxan oder Dioxolan, oder Mischungen aus Wasser und organischen Lösungsmitteln geeignet. Nach dem Abbau der instabilen Kettenenden wird das Polymer ausgefällt, gewaschen und getrocknet.

Produkte aus POM-Copolymeren werden seit langem kommerziell hergestellt und für technische Bauteile verwendet. Dabei wird von POM-Formmassen ein bestimmtes Niveau an mechanischen Eigenschaften wie Steifigkeit, Härte und Zähigkeit gefordert, das den Einsatz dieser Materialien für technische Bauteile wie Zahnräder, Hebel und viele andere erst möglich macht. Die in den Broschüren der Hersteller von POM-Copolymeren veröffentlichten Werte für die Streckspannung liegen zwischen 60 und 70 N/mm². Für den Zug-E-Modul von unmodifizierten Copolymeren findet man dort Werte zwischen 2400 und 3100 N/mm². Für die Kerbschlagzähigkeit bei 23 °C findet man Werte zwischen 4 und 12 mJ/mm².

Aufgrund dieser vorteilhaften Eigenschaften von POM-Formmassen besteht das Bedürfnis, für diese Materialien weitere Anwendungsfelder zu erschließen. Neben der Einhaltung des mechanischen Eigenschaftsprofils wird nun zunehmend gefordert, daß Formteile nur noch geringe Emissionen an Restmonomeren oder sonstigen flüchtigen Bestandteilen aufweisen dürfen. Die Automobilindustrie als einer der wichtigsten Märkte für Produkte aus POM hat dazu spezielle Analysenmethoden entwickelt, beispielsweise die VDA Empfehlung Nr. 275, Dokumentation Kraftfahrwesen e.V. Juli 1994.

Aufgrund ihrer vorteilhaften Eigenschaften besteht ferner das Bedürfnis, Polyoxymethylene auch für Sichtteile einzusetzen und für das Material weitere Anwendungsfelder zu erschließen. Hierfür ist es aber oft erforderlich, das Material optisch, d.h. farblich anzupassen. Zu diesem Zweck werden den POM-Formmassen Farbmittel in Form von Pigmenten oder polymerlöslichen Farbstoffen beigemischt.

Es ist nun allgemein bekannt (Damm, W. und Herrmann, E., in Gächter, Müller; Plastic Additives, 3. Ausgabe 1989, S. 730), daß gerade POM besonders schwierig einzufärben ist. Die Empfindlichkeit dieses Materials gegen Fremdstoffe, besonders wenn diese säurehaltig sind oder saure Gruppen aufweisen, was bei Farbmitteln oft der Fall ist, führt dazu, daß bei der Verarbeitung Materialabbau mit nachfolgender Formaldehydfreisetzung auftreten kann, was die unbeschränkte Einsetzbarkeit des Materials stark beeinträchtigt. Aus den genannten Gründen kann bisher nur eine begrenzte Anzahl von Farbmitteln zur Einfärbung von POM verwendet werden, ohne daß eine Beeinträchtigung der Produkt- und Materialeigenschaften erfolgt. Um den Materialabbbau in eingefärbten POM-Formmassen zu unterdrücken, werden im allgemeinen Stabilisatoren zugesetzt. Aber auch der Zusatz an Stabilisatoren konnte bislang dem Mangel der hohen Emission nicht abhelfen. Zudem führen viele Stabilisatoren zu einer Beeinträchtigung anderer geforderter Materialeigenschaften, beispielsweise zur Veränderung des mechanisches Eigenschaftsprofil, zur Bildung von Formbelag, Beeinträchtigung der Heißlichtechtheit, oder zu inhomogener Farbmittelverteilung.

Es wird seit langem versucht, diese Nachteile zu umgehen.

In JP 08208946 wird zu einer pigmentierten Polyacetal-Formmasse Dicyandiamid als Stabilisator zugegeben. Dadurch wird erreicht, daß der Formaldehyd-Geruch beim Spritzgießen ohne Verlust der physikalischen Eigenschaften verringert wird; allerdings ist bekannt, daß Dicyandiamid zur Formbelagsbildung neigt.

In JP-04077528 wird die Verwendung von POM als Trägermaterial für Pigmente beschrieben. Hier werden dem Gemisch zusätzlich noch Polyamid 6 und Borsäureester als Dispergiermittel beigemischt. In KR-9308188 ist der Einsatz von POM als Carrier für Leitfähigkeitsruß beschrieben.

Obwohl die Verwendung von POM als Trägermaterial für Pigmente wie oben angegeben bereits bekannt ist, wurde bislang dem bestehenden Mangel der chemischen Instabilität und nachfolgenden Formaldehydabspaltung bei der Verarbeitung und aus Formteilen bei gleichzeitigem Erhalt des geforderten Eigenschaftsprofils nur unzureichend abgeholfen.

Aus der DE-A-198 03 227 sind bereits eingefärbte POM-Formmassen mit verringerter Formaldehydemission bekannt. Diese wird durch den Einsatz eines stickstoffhaltigen Stabilisators erreicht.

In der EP-A-638,599 wird die Herstellung von POM-Formmassen unter Verwendung vom Trifluormethansulfonsäure beschrieben.

Ausgehend von diesem Stand der Technik waren Verfahren zur Herstellung von eingefärbten POM-Formmassen zu entwickeln, in denen die bislang beobachtete Formaldehydemission wesentlich vermindert ist, wobei die bekannten vorteilhaften Eigenschaften von POM nicht beeinträchtigt sind.

Die Aufgabe wird insbesondere dadurch gelöst, daß als Basismaterial für die eingefärbte POM-Formmasse ein Polyacetal-Copolymer verwendet wird, das durch Anwendung einer Trifluormethansulfonsäure und/oder eines Derivates der Trifluormethansulfonsäure als Protonensäure zur Initiierung der Polymerisation hergestellt wird.

Die Erfindung betrifft daher Verfahren zur Herstellung eingefärbter Polyacetal-Formmassen mit verringerter Formaldehyd-Emission, dadurch gekennzeichnet, dass ein im wesentlichen aus Oxymethylen- und Oxyethyleneinheiten bestehendes Polyacetal-Copolymer unter Verwendung von Trifluormethansulfonsäure und/oder eines Derivates der Trifluormethansulfonsäure als Initiator hergestellt wird, das Polyacetal-Copolymer mit mindestens einem Farbmittel ausgewählt aus einer oder mehrerer der Gruppen Weißpigmente, Schwarzpigmente, Farbpigmente gemischt wird und die Emission von Formaldehyd aus der eingefärbten Polyacetal-Formmasse geringer ist als aus einer Formmasse, bei der das Polyacetal-Copolymer unter Verwendung einer Lewissäure als Initiator hergestellt wurde.

Die Erfindung betrifft darüber hinaus ein Verfahren zur Verringerung der Formaldehydemission eingefärbter Formmassen aus Polyacetal-Copolymer, dadurch gekennzeichnet, dass ein im wesentlichen aus Oxymethylen- und Oxyethyleneinheiten bestehendes Polyacetal-Copolymer unter Verwendung von Trifluormethansulfonsäure und/oder eines Derivates der Trifluormethansulfonsäure als Initiator hergestellt wird, das Polyacetal-Copolymer mit mindestens einem Farbmittel ausgewählt aus einer oder mehrerer der Gruppen Weißpigmente, Schwarzpigmente, Farbpigmente gemischt wird und die Emission von Formaldehyd aus der eingefärbten Polyacetal-Formmasse Emission von Formaldehyd aus der eingefärbten Polyacetal-Formmasse geringer ist als aus einer Formmasse, bei der das Polyacetal-Copolymer unter Verwendung einer Lewissäure als Initiator hergestellt wurde.

Die Erfindung betrifft ferner die Verwendung eines Polyacetal-Copolymeren zur Herstellung von emissionsarmen, eingefärbten Formmassen und Formteilen, dadurch gekennzeichnet, dass das Polyacetal-Copolymer im wesentlichen aus Oxymethylen- und Oxyethyleneinheiten besteht, welches unter Verwendung von Trifluormethansulfonsäure und/oder eines Derivates der Trifluormethansulfonsäure als Initiator hergestellt wird, das Polyacetal-Copolymer mit mindestens einem Farbmittel ausgewählt aus einer oder mehrerer der Gruppen Weißpigmente, Schwarzpigmente, Farbpigmente gemischt wird und die Emission von Formaldehyd aus der eingefärbten Polyacetal-Formmasse geringer ist als aus einer Formmasse, bei der das Polyacetal-Copolymer unter Verwendung einer Lewissäure als Initiator hergestellt wurde.

Die erfindungsgemäß verwendeten eingefärbten Formmassen weisen eine Formaldehydemission von weniger als 20 mg/kg, vorzugsweise weniger als 10 mg/kg auf.

Es wurde gefunden, daß eingefärbte Formmassen aus POM-Copolymeren, die unter Verwendung von Trifluormethansulfonsäure und/oder eines Derivates der Trifluormethansulfonsäure als starken Protonensäuren zur Initiierung der Polymerisation hergestellt wurden, überraschenderweise weit geringere Emissionen aufweisen als solche, die unter Verwendung von Lewis-Säuren als Initiatoren hergestellt wurden.

Die als Basismaterial für die eingefärbten POM-Formmassen verwendeten POM-Copolymere weisen im wesentlichen Oxymethylen- und Oxyethyleneinheiten in der Polymerkette auf. Der Anteil der Oxyethyleneinheiten an den Struktureinheiten der Polymerkette beträgt 0,1 bis 10 mol-%, vorzugsweise 1,0 bis 2,5 mol-%. Der Schmelzindex MFI, gemessen nach ISO 1133 bei 190 °C und 2.16 kg Auflagegewicht, beträgt 1 bis 75 g/10 min, bevorzugt 13 bis 50 g/10 min und besonders bevorzugt von 25 bis 35 g/10 min. Das Zahlenmittel des Molekulargewichts bestimmt durch GPC liegt beträgt mindestens 5000 g/mol und höchstens 100000 g/mol.

Die Herstellung der erfindungsgemäß zu verwendenden POM-Copolymere erfolgt über eine Mischung aus Trioxan und einem zyklischen Ether oder zyklischen Acetal, vorzugsweise Dioxolan oder Ethylenoxid, der ein Dialkylformal, vorzugsweise Methylal, zur Einstellung des Molekulargewichts zugesetzt ist. Die zugesetzte Menge an Dialkylformal beträgt 3.4 bis 34 mmol bezogen auf die gesamte Monomermischung. Dem Reaktionsgemisch wird Trifluormethansulfonsäure und/oder ein Derivat der Trifluormethansulfonsäure als eine starke Protonensäure zur Initiierung der Polymerisation hinzugefügt. Dabei ist Trifluormethansulfonsäure bevorzugt. Die Initiatormenge beträgt im allgemeinen 0,01 bis 1,0 ppm bezogen auf die gesamte Monomermischung. Vorzugsweise werden 0,03 bis 0,4 ppm, besonders bevorzugt 0,05 bis 0,2 ppm an Initiator verwendet. Es ist vorteilhaft, den Initiator mit einem inerten Lösungsmittel und/oder dem als Kettenüberträger verwendeten Dialkylformal und/oder dem Comonomer zu vermischen und mit dieser Mischung die Polymerisation zu initiieren.

Das bei der Polymerisation gewonnene POM-Copolymer wird nach den bekannten Verfahren von instabilen Endgruppen befreit, gewaschen und getrocknet.

Die erfindungsgemäßen eingefärbten POM-Formmassen werden hergestellt, indem man das POM-Copolymer mit Farbmitteln und den gewünschten Stabilisatoren vermischt und die Mischung anschließend granuliert.

Die erfindungsgemäß hergestellten eingefärbten POM-Formmassen enthalten vorteilhaft 90 bis 99,8 Gew.-% POM-Copolymer, das mit einer starken Protonensäure oder deren Derivat als Initiator hergestellt wurde, 0,1 bis 3,0 Gew.-% Farbmittel und 0,1 bis 10 Gew.-% ausgewählte Stabilisatoren und Hilfsstoffe. Bei Bedarf können der Formmasse zudem auch Verstärkungs- und Füllstoffe beigemengt werden.

Als Stabilisatoren und Hilfsstoffe können die in POM üblichen Zuschlagsstoffe wie Antioxidantien, UV-Stabilisatoren, Entformungshilfen, Säurefänger, stickstoffhaltige Costabilisatoren und Nukleierungsmittel entweder einzeln oder als Gemisch enthalten sein.

Als Farbmittel können beliebige anorganische Pigmente wie Titandioxid, Ultramarinblau, Kobaltblau und andere, organische Pigmente und Farben wie Phthalocyanine, Anthrachinone und andere, oder Ruß entweder einzeln oder als Gemisch oder zusammen mit polymerlöslichen Farbstoffen eingesetzt werden. Überraschend zeigt sich nämlich, dass durch die erfindungsgemäße Herstellung der eingefärbten Polyacetal-Formmasse die Auswahl der Farbmittel nicht mehr auf die herkömmlichen besonders für Polyacetal, d.h. POM geeigneten Farbmittel beschränkt ist.

Die erfindungsgemäß hergestellten eingefärbten POM-Formmassen verfügen über eine wesentlich verminderte Emission. So beträgt die Formaldehydemission, gemessen an Platten der Wandstärke 1 mm nach 24 h Lagerdauer nach VDA 275 im allgemeinen weniger als 20 mg/kg, vorzugsweise weniger als 10 mg/kg. Einige in POM-Copolymeren üblicherweise verwendete Stabilisatoren wie stickstoffhaltige Costabilisatoren und Säurefänger beeinflussen die Formaldehydemission. Bei gleicher Stabilisierung weisen die erfindungsgemäß hergestellten eingefärbten POM-Formmassen wesentlich geringere Emissionswerte auf als der Stand der Technik. Daher kann bei den erfindungsgemäß hergestellten eingefärbten POM-Formmassen die Zugabe von Stabilisatoren deutlich reduziert und somit Kosten gespart werden.

Unter Umständen kann es außerdem vorteilhaft sein, die Farbstoffe vor der Vermischung mit dem Polyacetal-Copolymer mit einem Überzug zu versehen, der 3 Gew.-% oder mehr, bezogen auf die Menge des Pigments, eines Alkalimetalsalzes einer Fettsäure mit mindestens 12, vorzugsweise 12 bis 30 Kohlenstoffatomen enthält, beispielsweise ein Natrium- oder Kaliumstearat. Auf diese Weise kann die Emissionsneigung von eingefärbten Polyacetal-Copolymeren weiter vermindert werden.

Die mechanischen Eigenschaften der erfindungsgemäß hergestellten Formmassen entsprechen den üblichen Anforderungen an POM-Handelsprodukte, so daß die für POM üblichen Anwendungsfelder und Verarbeitungstechniken ohne Einschränkung genutzt werden können.

Besondere Anwendungsgebiete für die erfindungsgemäß hergestellten Formmassen sind Innenausstattungen und Verkleidungen von Verkehrsmitteln wie Automobile, Flugzeuge etc., Haushaltswaren, Spielzeugartikel, Babyartikel sowie elektronische und elektrotechnische Bauteile und Geräte. Besonders geeignet sind die erfindungsgemäß hergestellten Formmassen zur Herstellung von emissionsarmen Apparaturen und Instrumenten, oder Teilen davon, für medizinische Anwendungen.

### Beispiele

In den anschließenden Beispielen wurden die Materialeigenschaften nach folgenden Methoden bestimmt:
Schmelzindex (MFI) nach ISO 1133 bei 190 °C und 2,16 kg Auflagegewicht;
Zug-E-Modul nach ISO 527
Streckspannung nach ISO 527
Kerbschlagzähigkeit nach ISO 179
Formaldehydemission: Aus den eingefärbten POM-Formmassen werden Platten der Wandstärke 1 mm gefertigt. Nach einer Lagerdauer von 24 h wurde die Formaldehydemission aus den Platten nach VDA 275 ermittelt (VDA Empfehlung Nr. 275, Dokumentation Kraftfahrwesen e.V. Juli 1994).

Die Ergebnisse der Materialprüfung der folgenden Beispiele sind in Tabelle 1 zusammengefaßt.

In den Beispielen wurden folgende Pigmentmischungen verwendet:
Pigmentmischung (1): bestehend aus 53 Gew.-% Titandioxid, 39 Gew.-% Renolschwarz, 6,3 Gew.-% Titanorange und 1,7 Gew.-% Ekea Rot.
Pigmentmischung (2): bestehend aus: 39,3 Gew.-% Manganviolett VM 40, 4,4 % Titandioxid, 54,7 % Elfenbeinschwarz 64, 1,6 % Ultramarinblau 53
POM-Copolymer für die Herstellung der erfindungsgemäßen Formmassen

In einem Batch-Reaktor wurden bei einer Temperatur von 80 °C und einem Druck von ca. 1 bar 96,6 Gew.-% Trioxan, 3,4 Gew.-% Dioxolan und 1000 ppm Methylal vorgelegt. Zu dieser Mischung wurden 0,2 ppm Trifluormethansulfonsäure gelöst in 500 ppm Methylal hinzugegeben. Die Mengenangaben sind auf die gesamte

Monomermischung bezogen. Nach einer Induktionszeit von 30 Sekunden begann die Polymerisationsreaktion. Das gebildete Rohpolymer wurde in einer Wasser/Triethylamin-Mischung suspendiert und danach bei 170 °C in einer Wasser/Methanol (10/90) Mischung hydrolysiert. Beim Abkühlen auf Raumtemperatur fiel das Polymer als feines Pulver aus. Das Polymer wurde abgesaugt, mit Wasser gewaschen und getrocknet.

### Vergleichs-POM-Copolymer

Entsprechend den Reaktionsbedingungen in Beispiel 1 wurden 96,6 Gew.-% Trioxan, 3,4 Gew.-% Dioxolan und 800 ppm Methylal vorgelegt. Zu dieser Mischung wurden 30 ppm BF₃, bezogen auf die gesamte Monomermischung, hinzugegeben. Die Polymerisationsreaktion setzte nach einer Induktionszeit von 20 s ein. Das Polymer wurde entsprechend dem erfindungsgemäßen Basismaterial aufgearbeitet.

### Beispiel 1

Das POM-Copolymer für die Herstellung der erfindungsgemäßen POM-Formmassen wurde mit 1 Gew.-% Pigmentmischung 1 und mit 0,1 Gew.-% Licowax C (Hersteller: Clariant AG), 0,1 Gew.-% Calciumcitrat und 0,1 Gew.-% Irganox 1010 vermischt. Aus der Mischung wurde Granulat hergestellt, aus dem im Spritzgußverfahren die Prüfkörper für die Bestimmung des Zug-E-Moduls, der Streckspannung und der Kerbschlagzähigkeit sowie die Platten zur Ermittlung der Formaldehydemission geformt wurden.

### Beispiel 1a

Beispiel 1 wurde wiederholt mit dem Unterschied, daß das POM-Copolymer für die Herstellung der erfindungsgemäßen POM-Formmassen mit dem Anhydrid der Trifluormethansulfonsäure initiiert wurde.

### Vergleichsbeispiel 1

Das Vergleichs-POM-Copolymer wurde mit 1 Gew.-% Pigmentmischung 1 und mit Antioxidans, Säurefänger und Additiven entsprechend ihren Anteilen im Beispiel 1 vermischt. Aus der Mischung wurde Granulat hergestellt, aus dem im Spritzgußverfahren die Prüfkörper für die Bestimmung des Zug-E-Moduls, der Streckspannung und der Kerbschlagzähigkeit sowie die Platten zur Ermittlung der Formaldehydemission geformt wurden.

### Beispiel 2

Das POM-Copolymer für die Herstellung der erfindungsgemäßen POM-Formmassen wurde mit 1 Gew.-% Pigmentmischung 2 und mit 0,1 Gew.-% Licowax C, 0,1 Gew.-% Calciumcitrat und 0,1 Gew.-% Irganox 1010 vermischt. Aus der Mischung wurde Granulat hergestellt, aus dem im Spritzgußverfahren die Prüfkörper für die Bestimmung des Zug-E-Moduls, der Streckspannung und der Kerbschlagzähigkeit sowie die Platten zur Ermittlung der Formaldehydemission geformt wurden.

### Vergleichsbeispiel 2

Das Vergleichs-POM-Copolymer wurde mit 1 Gew.-% Pigmentmischung 2 und mit Antioxidans, Säurefänger und Additiven entsprechend ihren Anteilen im Beispiel 2 vermischt. Aus der Mischung wurde Granulat hergestellt, aus dem im Spritzgußverfahren die Prüfkörper für die Bestimmung des Zug-E-Moduls, der Streckspannung und der Kerbschlagzähigkeit sowie die Platten zur Ermittlung der Formaldehydemission geformt wurden.

### Beispiel 3

Das POM-Copolymer für die Herstellung der erfindungsgemäßen POM-Formmassen wurde mit 1 Gew.-% Pigmentmischung 1 und mit 0,1 Gew.-% Licowax C und 0,1 Gew.-% Melamin vermischt. Aus der Mischung wurde Granulat hergestellt, aus dem im Spritzgußverfahren die Prüfkörper für die Bestimmung des Zug-E-Moduls, der Streckspannung und der Kerbschlagzähigkeit sowie die Platten zur Ermittlung der Formaldehydemission geformt wurden.

### Vergleichsbeispiel 3

Das Vergleichs-POM-Copolymer wurde mit 1 Gew.-% Pigmentmischung 1 und mit Additiven entsprechend ihren Anteilen im Beispiel 3 vermischt. Aus der Mischung wurde Granulat hergestellt, aus dem im Spritzgußverfahren die Prüfkörper für die Bestimmung des Zug-E-Moduls, der Streckspannung und der Kerbschlagzähigkeit sowie die Platten zur Ermittlung der Formaldehydemission geformt wurden.

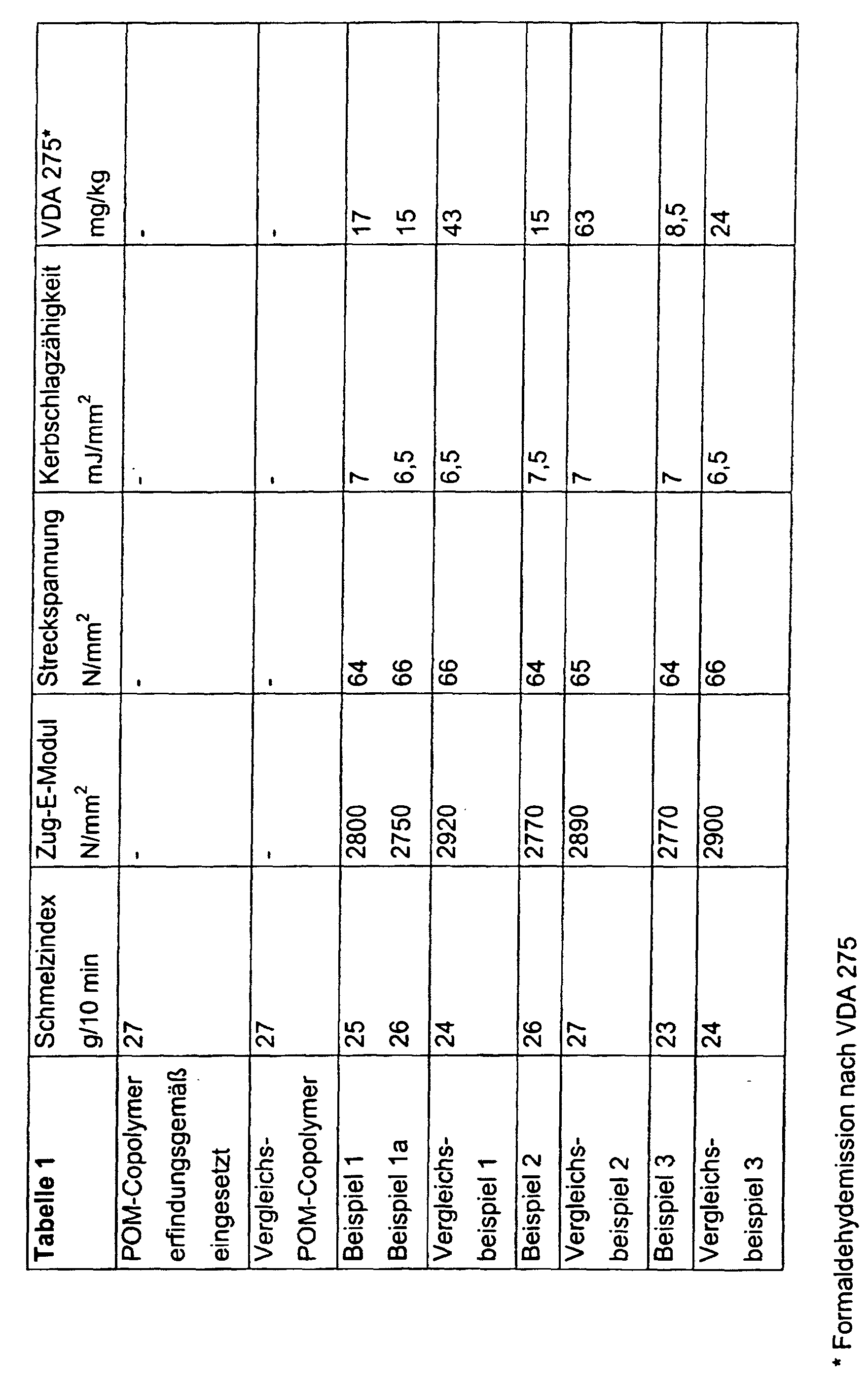

## Patentansprüche

1. Verfahren zur Herstellung eingefärbter Polyacetal-Formmassen mit verringerter Formaldehyd-Emission, **dadurch gekennzeichnet, daß** ein im wesentlichen aus Oxymethylen- und Oxyethyleneinheiten bestehendes Polyacetal-Copolymer unter Verwendung von Trifluormethansulfonsäure und/oder eines Derivates der Trifluormethansulfonsäure als Initiator hergestellt wird, das Polyacetal-Copolymer mit mindestens einem Farbmittel ausgewählt aus einer oder mehrerer der Gruppen Weißpigmente, Schwarzpigmente, Farbpigmente gemischt wird und die Emission von Formaldehyd aus der eingefärbten Polyacetal-Formmasse geringer ist als aus einer Formmasse, bei der das Polyacetal-Copolymer unter Verwendung einer Lewissäure als Initiator hergestellt wurde.

2. Verfahren nach Anspruch1, **dadurch gekennzeichnet, daß** die eingefärbte Polyacetal-Formmasse 0,1 bis 3,0 Gew.-% Farbmittel enthält.

3. Verfahren nach Anspruch 1 oder 2, **dadurch gekennzeichnet, daß** in mindestens einem weiteren Verfahrensschritt die Farbmittel mit einem Überzug eines Alkalimetallsalzes einer Fettsäure mit mindestens 12 Kohlenstoffatomen versehen werden.

4. Verfahren nach einem oder mehreren der Ansprüche 1 bis 3, wobei die Formaldehydemission, bestimmt nach VDA 275, maximal 60%, insbesondere weniger als 50% der Formaldehydemission einer eingefärbten Polyacetal-Formmasse beträgt, bei der das Polyacetal-Copolymer mit Bortrifluorid als Initiator hergestellt wurde.

5. Verfahren zur Verringerung der Formaldehydemission eingefärbter Formmassen aus Polyacetal-Copolymer, **dadurch gekennzeichnet, daß** ein im wesentlichen aus Oxymethylen- und Oxyethyleneinheiten bestehendes Polyacetal-Copolymer unter Verwendung von Trifluormethansulfonsäure und/oder eines Derivates der Trifluormethansulfonsäure als Initiator hergestellt wird, das Polyacetal-Copolymer mit mindestens einem Farbmittel ausgewählt aus einer oder mehrerer der Gruppen Weißpigmente, Schwarzpigmente, Farbpigmente gemischt wird und die Emission von Formaldehyd aus der eingefärbten Polyacetal-Formmasse geringer ist als aus einer Formmasse, bei der das Polyacetal-Copolymer unter Verwendung einer Lewissäure als Initiator hergestellt wurde.

6. Verwendung eines Polyacetal-Copolymeren zur Herstellung von emissionsarmen, eingefärbten Formmassen und Formteilen, **dadurch gekennzeichnet, daß** das Polyacetal-Copolymer im wesentlichen aus Oxymethylen- und Oxyethyleneinheiten besteht, welches unter Verwendung von Trifluormethansulfonsäure und/oder eines Derivates der Trifluormethansulfonsäure als Initiator hergestellt wird, das Polyacetal-Copolymer mit mindestens einem Farbmittel ausgewählt aus einer oder mehrerer der Gruppen Weißpigmente, Schwarzpigmente, Farbpigmente gemischt wird und die Emission von Formaldehyd aus der eingefärbten Polyacetal-Formmasse geringer ist als aus einer Formmasse, bei der das Polyacetal-Copolymer unter Verwendung einer Lewissäure als Initiator hergestellt wurde.

## Claims

1. Process for preparing coloured polyacetal compositions with reduced formaldehyde emission, **characterized in that** comprises preparing a polyacetal copolymer essentially consisting of oxymethylene units and oxyethylene units, using trifluoromethanesulphonic acid and/or a derivative of trifluoromethanesulphonic acid as initiator, mixing the polyacetal copolymer with at least one colourant selected from one or more of the groups consisting of white pigments, black pigments, and colour pigments, and obtaining a coloured polyacetal moulding composition whose emission of formaldehyde is lower than from a moulding composition for which the polyacetal copolymer was prepared using a Lewis acid as initiator.

2. Process according to Claim 1, **characterized in that** the coloured polyacetal moulding composition comprises from 0.1 to 3.0% by weight of colourants.

3. Process according to Claim 1 or 2, **characterized in that** at least one further step of the process is used to provide the colourants with a coating of an alkali metal salt of a fatty acid having at least 12 carbon atoms.

4. Process according to one or more of Claims 1 to 3, where the formaldehyde emission determined to VDA 275 is not more than 60%, in particular less than 50%, of the formaldehyde emission from a coloured polyacetal moulding composition for which the polyacetal copolymer was prepared using boron trifluoride as initiator.

5. Process for reducing the formaldehyde emission of coloured moulding compositions made from polyacetal copolymer, **characterized in that** it comprises preparing a polyacetal copolymer essentially consisting of oxymethylene units and oxyethylene units, using trifluoromethanesulphonic acid and/or a derivative of trifluoromethanesulphonic acid as initiator, mixing the polyacetal copolymer with at least one colourant selected from one or more of the groups consisting of white pigments, black pigments, and colour pigments, and obtaining a coloured polyacetal moulding composition whose emission of formaldehyde is lower than from a moulding composition for which the polyacetal copolymer was prepared using a Lewis acid as initiator.

6. Use of a polyacetal copolymer for preparing low-emission, coloured moulding compositions and mouldings, **characterized in that** the polyacetal copolymer essentially consists of oxymethylene units and oxyethylene units and has been prepared using trifluoromethanesulphonic acid and/or a derivative of trifluoromethanesulphonic acid as initiator, and the polyacetal copolymer is mixed with at least one colourant selected from one or more of the groups consisting of white pigments, black pigments, and colour pigments, and the emission of formaldehyde from the coloured polyacetal moulding composition is lower than from a moulding composition for which the polyacetal copolymer was prepared using a Lewis acid as initiator.

## Revendications

1. Procédé pour la préparation de matières à mouler à base de polyacétal, colorées, à émission réduite de formaldéhyde, **caractérisé en ce qu'**un copolymère de polyacétal essentiellement constitué de motifs oxyméthylène et oxyéthylène est préparé avec utilisation d'acide trifluorométhanesulfonique et/ou d'un dérivé de l'acide trifluorométhanesulfonique en tant qu'amorceur, le copolymère de polyacétal est mélangé avec au moins un agent colorant choisi dans un ou plusieurs des groupes constitués par les pigments blancs, les pigments noirs, les pigments colorés, et l'émission de formaldéhyde à partir de la matière à mouler à base de polyacétal, colorée, est plus faible qu'à partir d'une matière à mouler dans laquelle le copolymère de polyacétal a été préparé avec utilisation d'un acide de Lewis en tant qu'amorceur.

2. Procédé selon la revendication 1, **caractérisé en ce que** la matière à mouler à base de polyacétal, colorée, contient de 0,1 à 3,0 % en poids d'agent colorant.

3. Procédé selon la revendication 1 ou 2, **caractérisé en ce que** dans au moins une autre étape du procédé les agents colorants sont munis d'un enrobage d'un sel de métal alcalin d'un acide gras ayant au moins 12 atomes de carbone.

4. Procédé selon une ou plusieurs des revendications 1 à 3, dans lequel l'émission, déterminée selon VDA 275, représente au maximum 60 %, en particulier moins de 50 % de l'émission de formaldéhyde d'une matière à mouler à base de polyacétal, colorée, dans laquelle le copolymère de polyacétal a été préparé avec du trifluorure de bore en tant qu'amorceur.

5. Procédé pour réduire l'émission de formaldéhyde de matières à mouler à base de copolymère de polyacétal, colorées, **caractérisé en ce qu'**un copolymère de polyacétal essentiellement constitué de motifs oxyméthylène et oxyéthylène est préparé avec utilisation d'acide trifluorométhanesulfonique et/ou d'un dérivé de l'acide trifluorométhanesulfonique en tant qu'amorceur, le copolymère de polyacétal est mélangé avec au moins un agent colorant choisi dans un ou plusieurs des groupes constitués par les pigments blancs, les pigments noirs, les pigments colorés, et l'émission de formaldéhyde à partir de la matière à mouler à base de polyacétal, colorée est plus faible qu'à partir d'une matière à mouler dans laquelle le copolymère de polyacétal a été préparé avec utilisation d'un acide de Lewis en tant qu'amorceur.

6. Utilisation d'un copolymère de polyacétal pour la production de matières à mouler et de pièces moulées, colorées, à faible émission, **caractérisée en ce que** le copolymère de polyacétal est essentiellement constitué de motifs oxyméthylène et oxyéthylène et est préparé avec utilisation d'acide trifluorométhanesulfonique et/ou d'un dérivé de l'acide trifluorométhanesulfonique en tant qu'amorceur, le copolymère de polyacétal est mélangé avec au moins un agent colorant choisi dans un ou plusieurs des groupes constitués par les pigments blancs, les pigments noirs, les pigments colorés, et l'émission de formaldéhyde à partir de la matière à mouler à base de polyacétal, colorée, est plus faible qu'à partir d'une matière à mouler dans laquelle le copolymère de polyacétal a été préparé avec utilisation d'un acide de Lewis en tant qu'amorceur.
